# DEMANDE DE BREVET EUROPEEN

(11) **EP 4 125 240 A1**
(43) Date de publication de la demande: **01.02.2023**
(21) Numéro de dépôt: 22185232.0
(22) Date de dépôt: 15.07.2022
(51) Int. Cl.: H04L 9/08, H04W 12/03, H04W 12/041

(54) **ELEMENT SECURISE PRE-PERSONALISE ET PERSONNALISATION EMBARQUEE**

(30) Priorité: 30.07.2021 FR 2108327
(71) Demandeur: IDEMIA France, 92400 Courbevoie (FR)
(72) Inventeur: DUPUY, Maxyme, 95870 BEZONS (FR); CARDOSO, Dominique, 78120 RAMBOUILLET (FR); WOZNIAK, Tomasz, 78630 ORGEVAL (FR)
(74) Mandataire: Santarelli

(57) **Abrégé**

Une nouvelle méthode de personnalisation d'éléments sécurisés embarqués, eSE, permet une fabrication simplifiée avant intégration dans des équipements hôtes. Un eSE met en œuvre des services exécutés par un système d'exploitation, OS, embarqué lorsqu'il est chargé dans l'eSE. L'eSE non personnalisé comprend un chargeur d'OS et une clé cryptographique maître commune à une pluralité d'éléments sécurisés. Il peut donc être produit en grand nombre. Le chargeur d'OS obtient, d'un serveur, un package de système d'exploitation et l'installe. En réponse à l'installation, le chargeur d'OS génère une clé cryptographique de dérivation par diversification de la clé cryptographique maître, puis l'OS génère des données personnalisées par dérivation de données de pré-personnalisation avec la clé de dérivation. L'eSE, déployé sur le terrain dans un état simple non-personnalisé, est ainsi entièrement personnalisé sans échange de données personnalisées secrètes.

## Description

### Domaine technique

La présente invention concerne le domaine des éléments sécurisés.

### Technique antérieure

Un élément sécurisé, SE (pour « secure élément » en langue anglo-saxonne), est un composant ou plate-forme matérielle inviolable (typiquement une puce ou une carte à puce) utilisée dans un terminal hôte (typiquement un terminal mobile) et capable d'héberger, de façon sûre sous le contrôle d'un système d'exploitation OS de carte (c'est-à-dire un OS bas niveau ou « firmware »), des applications et des données en conformité avec des règles et des exigences de sécurité fixées par des autorités de confiance.

Un facteur de forme largement utilisé du SE est l'élément sécurisé embarqué ou intégré, eSE (pour « embedded Secure Element »). Cet élément sécurisé embarqué est généralement soudé au terminal hôte.

Les éléments sécurisés sont programmés selon les applications souhaitées.

A titre d'exemple, un eSE peut former l'élément sécurisé nécessaire à de nombreux usages ou services reposant sur une communication NFC (pour « Near Field Communication » en langue anglo-saxonne) mis en œuvre par un terminal mobile hôte. Par exemple, un service de paiement NFC nécessite des informations bancaires secrètes de l'utilisateur qui sont avantageusement stockées dans l'eSE, à l'abri de tout accès intempestif. C'est aussi le cas d'un service de transport public où l'eSE permet d'identifier l'utilisateur auprès de portiques.

Un autre exemple d'élément sécurisé est l'UICC embarquée (pour « Universal Integrated Circuit Card ») qui procure les références d'un abonné pour s'authentifier sur un réseau de téléphonie mobile. Il s'agit par exemple d'un eSE configuré comme une carte SIM (pour « Subscriber Identity Module » - ou module d'identité d'abonné). On parle alors d'eUICC (pour « embedded Universal Integrated Circuit Card »).

Les éléments sécurisés sont fabriqués et ensuite personnalisés, c'est-à-dire chargés avec des données propres au SE et à l'abonné. Certaines données doivent être maintenues secrètes pour des raisons de sécurité, telles que des justificatifs d'identification (aussi connus sous l'appellation anglo-saxonne de « credentials »), des clés cryptographiques ou des données d'identification. D'autres données propres au SE peuvent être moins confidentielles. Aussi, pendant la personnalisation d'un groupe de SEs, des données secrètes sont généralement diversifiées à partir d'une donnée secrète, par exemple une clé cryptographique de dérivation, de manière à ce que chaque SE ait des données secrètes qui lui sont propres, par exemple des clés cryptographiques et justificatifs d'identification.

En particulier, la personnalisation est un processus consistant à charger sur chaque SE, son système d'exploitation (ou OS pour « Operating System » en langue anglo-saxonne) et diverses données.

Pour des raisons d'optimisation du processus de personnalisation, le processus est décomposé en deux processus distincts : la pré-personnalisation et la personnalisation. La pré-personnalisation consiste à charger, dans le SE, des données communes à tous les SEs d'un même lot. Aussi, tout le lot de SEs peut être pré-personnalisé à l'aide de la même opération. Cette partie commune comporte notamment le chargement en mémoire du système d'exploitation et des données pré-personnalisées, nommées aussi données statiques. La personnalisation est mise en œuvre à la suite de la pré-personnalisation, et consiste à charger dans le SE, des données qui lui sont propres, nommées aussi données dynamiques, incluant donc les données secrètes personnalisées (clés, credentials, etc.).

On notera que le terme « *personnalisation* » est en général compris comme étant celui utilisé couramment par l'homme du métier dans l'industrie des cartes à microcircuit, ou tel que défini par W. Ranki et W. Effing dans le document « Smart Card Handbook, Second Edition, Ed. John Wiley & Sans, Ltd » de la façon suivante : « *Le terme* personnalisation, *dans son sens le plus large, signifie que les données spécifiques à une carte ou à une personne sont entrées dans la carte. Ces données peuvent par exemple être un nom, une adresse, mais aussi des clefs associées* à *la carte. La seule chose qui importe est que ces données soient spécifiques à cette carte. »*

Par extension, la pré-personnalisation des SEs consiste en des opérations similaires sauf que les données entrées dans les SEs sont communes à un lot de SEs ou à un type d'entité (par exemple les cartes à puces). Il s'agit par exemple de données de configuration de programmes contenus dans une mémoire non volatile réinscriptible (par exemple de type Flash, EEPROM ou autre) qui visent à déterminer un comportement ou un fonctionnement commun à tous ces SEs du même lot ou du même type d'entité.

Aujourd'hui, les SEs sont personnalisés hors du site de fabrication. Par exemple, la personnalisation peut être mise en œuvre dans un site tiers.

Les sites de personnalisation doivent donc mettre en place des systèmes de personnalisation selon des procédures strictes et respectant des exigences sécuritaires, notamment au regard des données secrètes personnalisées manipulées. On notera que l'envoi des données de personnalisation au site de personnalisation requiert aussi le respect d'exigences sécuritaires très strictes, notamment la mise en place d'un lien sécurisé (clé de transport, clé de session) entre le système de personnalisation et les SEs.

En outre, l'opération de personnalisation est spécifique à chaque SE, exigeant par conséquent des opérations distinctes pour chaque SE avant ou après son intégration physique (soudure pour un eSE) à un dispositif hôte.

Aussi, les procédures existantes de personnalisation de SEs sont complexes (en terme de temps et de sécurisation, notamment) et donc coûteuses.

Il est donc un besoin d'améliorer cette situation.

### Résumé de l'invention

Dans ce dessein, la présente invention a pour but d'optimiser la personnalisation des éléments sécurisés.

Elle propose de générer (par diversification ou « rotation »), au sein même du SE et sur chargement d'un nouveau système d'exploitation, la clé de dérivation utilisée pour la personnalisation du SE et ainsi permettre la dérivation des données de personnalisation également au sein du SE à partir de données pré-personnalisées.

Ainsi, des lots de SEs similaires peuvent être fabriqués et vendus sans opération dédiée de personnalisation avant leur vente. Ces SEs ne comportant que des données communes et donc de pré-personnalisation, leur fabrication en grand nombre est simple.

Par ailleurs, la personnalisation des SEs peut alors être réalisée ultérieurement sur le terrain, à distance, réduisant donc le temps de la phase de production jusqu'à la vente.

Enfin et surtout, l'invention améliore la sécurisation des SEs. D'une part, aucune donnée personnalisée secrète n'est désormais transférée directement sur le SE et donc susceptible d'être interceptée. On s'affranchit ainsi d'un site de personnalisation hautement sécurisé. D'autre part, grâce à la diversification in situ de la clé de dérivation utilisée pour la personnalisation, il est possible de réitérer une telle diversification dans la vie de la carte, réduisant par conséquent les risques de compromission.

A cet effet, la présente invention propose un élément sécurisé configuré pour être intégré dans un dispositif hôte et pour mettre en œuvre des services exécutés par un système d'exploitation lorsque le système d'exploitation est chargé dans l'élément sécurisé, l'élément sécurisé comportant un chargeur de système d'exploitation et au moins une clé cryptographique maître. Cette clé est initialement commune à une pluralité d'éléments sécurisés. Le chargeur de système d'exploitation et la clé cryptographique (et éventuellement toute autre donnée de pré-personnalisation commune) sont notamment chargés dans l'élément sécurisé pendant sa fabrication, avant ou après intégration dans le dispositif hôte.

Selon l'invention, l'élément sécurisé est configuré pour :
- obtenir, d'un serveur, un package de système d'exploitation et installer le système d'exploitation,
- en réponse à l'installation du système d'exploitation, faire générer, par le chargeur de système d'exploitation, une clé (cryptographique) de dérivation par diversification de la clé cryptographique maître puis faire générer des données personnalisées à l'aide de la clé de dérivation.

Ainsi, la présence du chargeur de système d'exploitation (ou chargeur de firmware ou « firmware loader » en langue anglo-saxonne) dans l'élément sécurisé eSE dès sa fabrication permet de charger à tout moment un système d'exploitation, que ce soit le premier système d'exploitation chargé dans l'eSE ou une version de mise à jour, et de générer localement (« on board ») la clé de dérivation afin de permettre au système d'exploitation de générer (dériver) ses propres données personnalisées. De telles données personnalisées, propres au système d'exploitation et/ou à l'élément sécurisé embarqué, donnent par exemple accès en toute sécurité à des services du système d'exploitation ou externes, par exemple d'un réseau de télécommunications ou bancaire (e.g. appels téléphoniques, services data, authentification auprès d'un serveur, etc.).

Un tel élément sécurisé présente l'avantage de ne pas être personnalisé lors de son intégration dans le dispositif hôte. Des éléments sécurisés identiques peuvent donc être fabriqués en grand nombre, tout en permettant une personnalisation embarquée à distance, sur le terrain.

Aussi, selon certains modes de réalisation, le package de système d'exploitation comprend des données de pré-personnalisation, éventuellement associées au système d'exploitation, et

l'élément sécurisé est configuré pour générer des données personnalisées par dérivation des données de pré-personnalisation avec la clé de dérivation.

Grâce à cette dérivation, l'élément sécurisé devient personnalisé.

Il est à noter que des données de pré-personnalisation peuvent également être chargées initialement avec le chargeur de système d'exploitation et être utilisées lors de cette diversification pour personnalisation. De même, des données personnalisées peuvent également être chargées de façon concomitante au chargement du système d'exploitation.

Dans un mode de réalisation, le chargeur de système d'exploitation est configuré pour générer la clé de dérivation à partir de la clé cryptographique maître, d'un identifiant unique du chargeur de système d'exploitation, d'un identifiant unique du package de système d'exploitation ou du système d'exploitation chargé et installé, et d'un compteur de dérivation mis à jour à chaque génération de la clé de dérivation. Optionnellement, un aléa ou un mot de passe à usage unique (OTP) connu du serveur ou d'un autre serveur peut être ajouté comme paramètre de diversification de la clé cryptographique maître.

Cette configuration permet une personnalisation sécurisée de la clé de dérivation, différente d'un élément sécurisé à l'autre et différente d'une diversification à l'autre au sein d'un même eSE.

La diversification peut être réalisée directement à partir de la clé cryptographique maître initiale ou à partir de la précédente clé de dérivation obtenue (qui devient la nouvelle clé maître pour la génération suivante). Dans le dernier cas, il peut être envisagé d'écraser l'ancienne clé de dérivation (initialement la clé maître ou racine) par la nouvelle clé de dérivation.

Lorsque l'élément sécurisé est fabriqué et avant qu'un système d'exploitation ne soit chargé, le compteur de dérivation présente une valeur initiale, par exemple zéro. La valeur du compteur de dérivation est incrémentée à fur et à mesure que de nouvelles versions du système d'exploitation sont obtenues et installées, et que de nouvelles clés de dérivation sont générées.

Selon une caractéristique, l'élément sécurisé est configuré en outre pour, postérieurement à la génération de la clé de dérivation, envoyer à un serveur l'identifiant unique du chargeur de système d'exploitation, l'identifiant unique du package de système d'exploitation ou du système d'exploitation chargé et installé, le compteur de dérivation, et optionnellement un label désignant la clé cryptographique maître. En d'autres termes, il transmet l'ensemble des paramètres utilisés (l'éventuel aléa ou OTP est déjà connu du serveur) pour la génération. Le label de clé est transmis notamment dans le cas où une pluralité de clés serait stockée dans l'élément sécurisé, afin d'identifier la clé servant à la diversification puis à la génération des données personnalisées.

Le serveur peut ainsi générer de son côté la clé de dérivation propre à l'eSE pour le système d'exploitation embarqué, et ainsi également générer les données personnalisées propres à cet eSE, sans que des données secrètes soient échangées. Il possède donc, en miroir, les mêmes données personnalisées et secrètes que l'eSE. Un tel serveur est alors en mesure de réaliser des opérations sécurisées d'identification, authentification, etc. avec l'élément sécurisé.

Dans un mode de réalisation, l'élément sécurisé est configuré pour envoyer au serveur une requête d'obtention du package de système d'exploitation, la requête comprenant un identifiant unique du chargeur de système d'exploitation et un identifiant unique d'un package de système d'exploitation ou d'un système d'exploitation déjà installé s'il y en a un, et

l'obtention du package de système d'exploitation est en réponse à la requête.

Chaque lot d'éléments sécurisés dispose, en commun, d'un chargeur de systèmes d'exploitation et d'une clé maître, et de façon unique à chaque eSE, d'un identifiant unique de chargeur. Ainsi, des eSE identiques peuvent être personnalisés de façon distincte et ciblée.

Selon une caractéristique, l'élément sécurisé est configuré pour générer la clé de dérivation en réponse à un événement de fin d'installation du système d'exploitation.

En variante, l'élément sécurisé est configuré pour générer la clé de dérivation en réponse à un premier démarrage (premier boot) du système d'exploitation installé.

Aussi à chaque nouveau chargement d'un système d'exploitation (par exemple mise à jour), une nouvelle clé de dérivation est générée. De façon incidente, de nouvelles données personnalisées sont également générées, par dérivation à partir de cette nouvelle clé.

Selon une caractéristique, l'élément sécurisé comprend un drapeau mis à une première valeur d'état non diversifié, lors de l'installation du système d'exploitation et à une seconde valeur d'état diversifié, lors de la génération de la clé de dérivation. Ce drapeau permet ainsi à l'élément sécurisé de savoir si la génération de la clé de dérivation a déjà eu lieu. Cela est utile notamment pour identifier le premier démarrage du système d'exploitation et ainsi éviter des générations intempestives à chaque redémarrage du système d'exploitation. Optionnellement, le drapeau peut être mis à une troisième valeur d'état personnalisé, lors de la génération des données personnalisées.

Selon une caractéristique, la clé cryptographique maître est stockée en mémoire sécurisée et accessible par le chargeur de système d'exploitation uniquement. Aussi, les paramètres reçus par le chargeur pour générer la clé de dérivation ne comprennent qu'un label (ou identifiant) de la clé cryptographique maître à utiliser (par exemple pour le cas où plusieurs clés maîtres seraient stockées) pour la génération, et non la clé elle-même. Cela renforce la sécurité.

Corrélativement, l'invention propose également un procédé de personnalisation d'un élément sécurisé configuré pour être intégré dans un dispositif hôte et pour mettre en œuvre des services exécutés par un système d'exploitation lorsque le système d'exploitation est chargé dans l'élément sécurisé, l'élément sécurisé comportant un chargeur de système d'exploitation et au moins une clé cryptographique maître (initialement commune à une pluralité d'éléments sécurisés), ledit procédé comportant les étapes suivantes :
- obtenir d'un serveur un package de système d'exploitation et installer le système d'exploitation,
- en réponse à l'installation du système d'exploitation, faire générer, par le chargeur de système d'exploitation, une clé de dérivation par diversification de la clé cryptographique maître puis faire générer des données personnalisées à l'aide de la clé de dérivation.

Le procédé de génération présente des caractéristiques et avantages analogues à ceux décrits précédemment en relation avec le circuit intégré.

Le procédé peut en outre incorporer des étapes ou caractéristiques facultatives exposées ci-dessus en lien avec des caractéristiques de dispositif (élément sécurisé).

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
La **Figure 1** représente, schématiquement, un élément sécurisé dans lequel la présente invention peut être mise en œuvre.
La **Figure 2a** illustre un élément sécurisé en sortie de processus de fabrication lorsqu'il est intégré à un dispositif hôte.
La **Figure 2b** illustre l'élément sécurisé après l'installation d'un nouveau package de système d'exploitation.
La **Figure 2c** illustre l'élément sécurisé après la diversification de la clé maître pour obtenir une clé de dérivation.
La **Figure 2d** illustre l'élément sécurisé après une opération de génération de données personnalisées par dérivation à partir de la clé de dérivation.
La **Figure 3** illustre schématiquement différentes étapes pour la personnalisation d'un élément sécurisé selon des modes de réalisation de l'invention.

### Description détaillée

L'invention propose un nouveau scénario de personnalisation d'éléments sécurisés embarqués (ou « embedded Secure Element », eSE) qui permet une fabrication plus simple et plus rapide de eSEs avant intégration dans leurs équipements hôtes. Un eSE met en œuvre des services exécutés par un système d'exploitation embarqué (ou « firmware ») lorsque le système d'exploitation est chargé dans l'élément sécurisé. A titre d'exemple, de tels services incluent une identification ou authentification auprès d'un opérateur ou réseau bancaire ou de télécommunication sans fil ou auprès d'un lecteur pour réaliser une transaction (financière ou bancaire par exemple), des services de vérification d'accès à des fonctions ou services (par exemple vérification de code d'accès), des services de confidentialité de données ou de messages (intégrité et/ou confidentialité de données), des services de non-répudiation, ...

Selon l'invention, un tel eSE destiné à être intégré dans un dispositif hôte comprend un chargeur de système d'exploitation (OS ou firmware loader) et au moins une clé cryptographique maître commune à une pluralité d'éléments sécurisés. Un tel eSE n'est à ce stade pas personnalisé, permettant ainsi sa production identique en grand nombre. Optionnellement, des données pré-personnalisées peuvent être également chargées dans l'eSE lors de sa fabrication (c'est-à-dire avant intégration dans le dispositif hôte). De façon similaire, certaines données déjà personnalisées peuvent également être chargées à ce stade. Les données pré-personnalisées et personnalisées peuvent couvrir tout type de données, incluant des données applicatives (pour le fonctionnement d'applications) et des données sécuritaires (pour des opérations prévenant une utilisation frauduleuse de l'élément sécurisé) telles des clés cryptographiques ou « keysets ».

Le chargeur d'OS ou de firmware est un bout de programme minimal permettant d'effectuer certaines fonctions de base sur l'élément sécurisé, tel exécuter un script, charger un OS et des données associées, installer un OS et les données associées, calculer des valeurs de clefs, etc.

On entend par « donnée pré-personnalisée » ou « donnée statique » toute donnée commune à un lot d'éléments sécurisés, par exemple un système d'exploitation, une clé cryptographique commune, un chargeur de système d'exploitation, un ensemble de clefs d'authentification dédiées à la sécurisation des communications avec un ou des serveur tiers (canal sécurisé), des données et/ou valeurs d'initialisation de compteurs, des données et/ou valeurs de labels d'identification de clefs, etc.

On entend par « donnée personnalisée » ou « donnée dynamique » toute donnée spécifique à un élément sécurisé (et donc indirectement à un utilisateur ou abonné ou un dispositif incluant l'élément sécurisé), par exemple une clé de diversification ou d'identification, des données utilisateur ou abonné, une valeur spécifique de registre ou de fichier, des justificatifs d'identification (« credentials » en anglais), des données d'opérateur (par exemple des adresses de serveurs du réseau de l'opérateur), des codes personnels d'identification (« PIN » ou « personal identification number» en anglais) d'utilisateur ou d'applications, des valeurs de données d'applications, etc. Les données personnalisées peuvent être dérivées de certaines données pré-personnalisées. La dérivation peut être une diversification de clé cryptographique ou plus généralement un calcul mathématique sur des données pré-personnalisées.

Le chargeur d'OS, et plus généralement l'élément sécurisé, est configuré pour obtenir, d'un serveur distant (par exemple le serveur d'un opérateur téléphonique ou bancaire, ou bien du fabricant ou du gestionnaire de l'élément sécurisé), un package de système d'exploitation et pour installer le système d'exploitation dans l'élément sécurisé. Les mécanismes de chargement et installation d'OS sont largement connus et donc non détaillés ici. Un package de système d'exploitation est entendu au sens informatique, à savoir un ensemble de logiciel et fichiers fournis ensemble, par exemple sous la forme d'une structure (fichier ou archive) informatique unique. Dans certains modes de réalisation, un package de système d'exploitation peut être réduit à un système d'exploitation seul.

Par ailleurs, l'élément sécurisé est prévu, en réponse à l'installation du système d'exploitation, pour faire générer, par le chargeur de système d'exploitation, une clé (cryptographique) de dérivation par diversification de la clé cryptographique maître. Le chargeur peut en effet être conçu pour avoir accès à la mémoire sécurisée stockant les données secrètes, telles que la clé cryptographique maître.

La clé de dérivation, une fois générée, permet ensuite à l'élément sécurisé de générer des données personnalisées par dérivation de données de pré-personnalisation (présentes dans l'eSE) avec la clé de dérivation. En variante, des données de personnalisation (par exemple, clés personnalisées) peuvent être directement générées à partir de la seule clé de dérivation.

Ces opérations (chargement de l'OS, diversification et dérivation de données personnalisées) peuvent avoir lieu alors que l'élément sécurisé est déjà intégré dans son dispositif hôte, c'est-à-dire sur le terrain. On s'affranchit donc de l'utilisation d'un site de personnalisation.

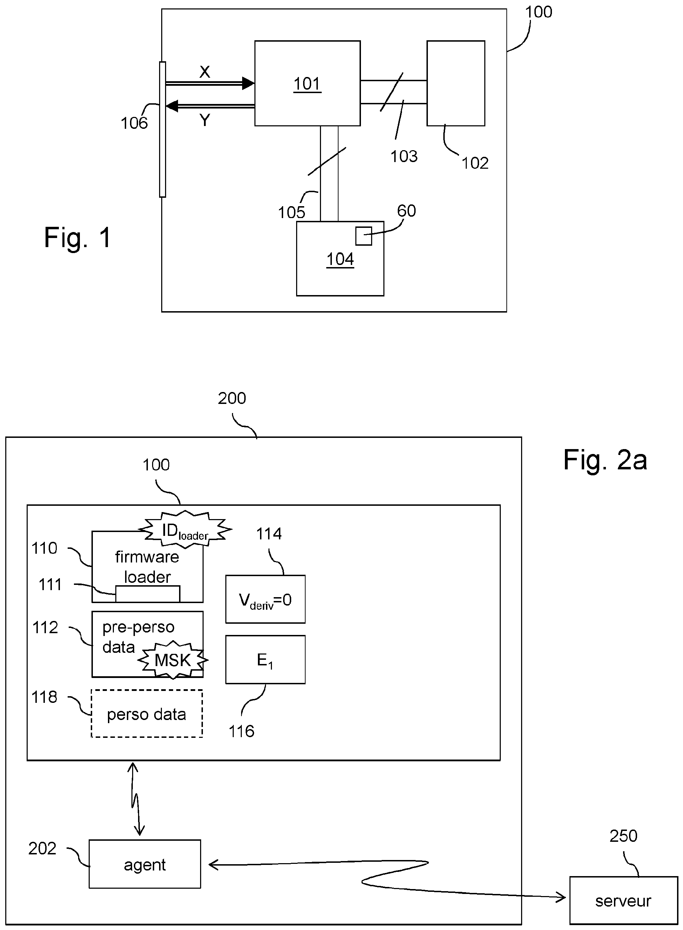

La **Figure 1** représente, schématiquement, un élément sécurisé 100 dans lequel la présente invention est mise en œuvre. Cet élément sécurisé 100 comprend un microprocesseur 101, auquel est associée d'une part une ou plusieurs mémoires vives 102, par exemple au moyen d'un bus 103, et d'autre part une ou plusieurs mémoires non volatiles 104 (par exemple du type ROM et/ou EEPROM et/ou flash), par exemple à travers un bus 105. La mémoire de stockage non volatile 104 stocke des données et logiciels (chargeur, système d'exploitation et autres applications) destinés à mettre en œuvre l'invention mais également de toute donnée nécessaire à l'exécution des programmes. La mémoire volatile de travail 102 stocke le code exécutable des programmes informatiques ainsi que les registres adaptés pour enregistrer des variables et des paramètres nécessaires à leur exécution.

Les bus 103 et 105 peuvent être un seul et même bus. Le microprocesseur 101 peut être un cryptoprocesseur sécurisé.

L'élément sécurisé 100 comporte en outre, reliées au(x) bus, une ou plusieurs interfaces de communication 106 avec le dispositif hôte embarquant l'élément sécurisé, mettant en œuvre typiquement des commandes de type APDU.

L'élément sécurisé 100 peut être un eSE (« embedded SE »), une eUICC (« embedded Universal Integrated Circuit Card »), une eSIM (« embedded SIM »), destiné à être intégré, par soudage par exemple, à un dispositif hôte tel qu'un téléphone intelligent (smartphone), une tablette numérique, un ordinateur portable, un assistant personnel, un dispositif de divertissement (e.g. console de jeu).

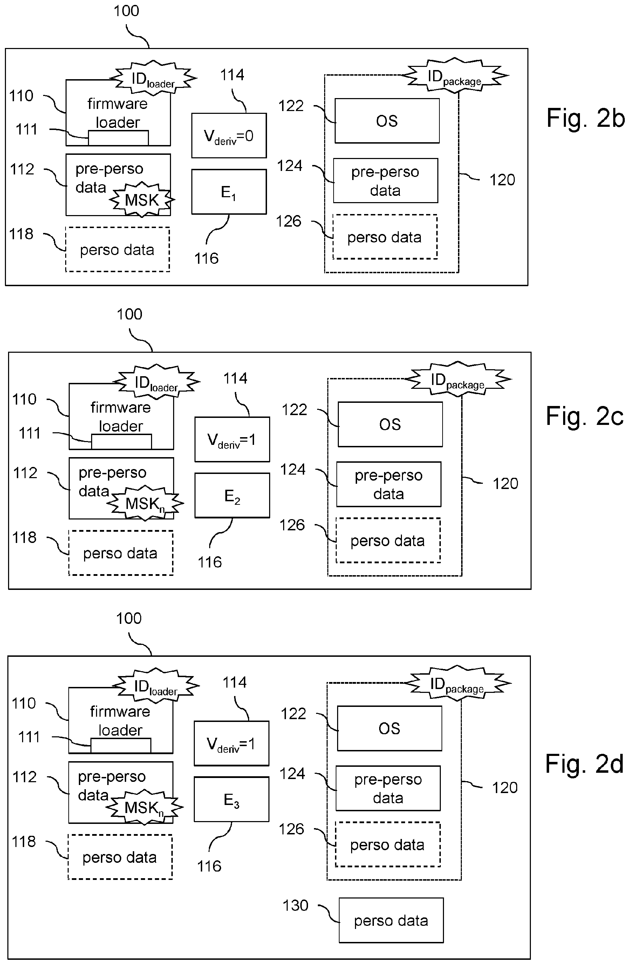

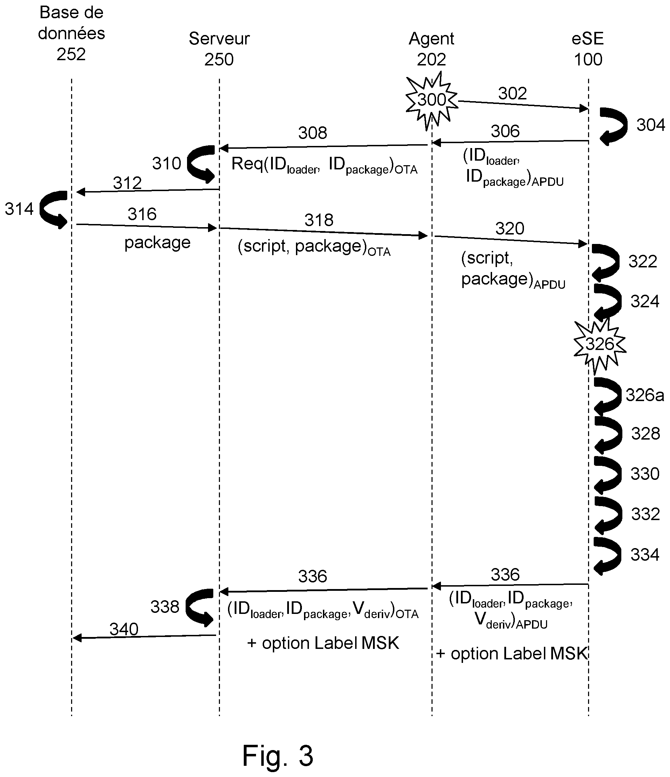

Les **Figures 2a****,** **2b, 2c** illustrent schématiquement une structure fonctionnelle de l'élément sécurisé 100 selon différents états dans un processus de personnalisation de l'élément sécurisé. La **Figure 3** illustre schématiquement différentes étapes pour la personnalisation d'un élément sécurisé selon des modes de réalisation de l'invention.

La **Figure 2a** illustre un élément sécurisé 100 en sortie d'usine, c'est-à-dire en sortie de processus de fabrication lorsqu'il est intégré à un dispositif hôte 200. Avantageusement, un lot d'éléments sécurisés identiques à celui de la **Figure 2a** peut être fabriqué puis intégré à une flotte de dispositifs hôtes car ces éléments sécurisés sont de préférence non encore personnalisés à ce stade. Néanmoins dans certains modes de réalisation, il peut être prévu que dès le processus de fabrication, des données personnalisées soient chargées en mémoire de l'élément sécurisé 100.

L'élément sécurisé 100 en sortie de site de fabrication comporte, en mémoire non volatile 104, un chargeur 110 de système d'exploitation de carte et des données pré-personnalisées 112 incluant notamment une ou des données secrètes telles qu'une clé cryptographique maître ou racine, MSK, de type numérique ou alphanumérique. Les données secrètes sont notamment stockées dans un secteur protégé (d'un point de vue sécuritaire) de la mémoire non volatile, par exemple à l'aide d'un domaine de sécurité dédié (par exemple ISD (pour « issuer security domain » en anglais) selon le document Global Platform Card Spécification version 2.3). Dans une variante, chaque donnée secrète, typiquement la clé MSK, est stockée dans un objet informatique associé au chargeur 110. Cet objet informatique peut être protégé, par chiffrement en confidentialité et en intégrité. Il est préférentiellement stocké dans une partition de la mémoire non volatile associée au chargeur 110. Ces différentes configurations garantissent un accès sécurisé à la clé MSK (et généralement aux données secrètes) par le chargeur 110 uniquement.

Le chargeur 110 peut manipuler directement ces objets ou disposer d'une interface API 111 permettant l'accès au domaine de sécurité et donc aux données secrètes à l'aide de labels (ou identifiants ou étiquettes ou pointeurs ou équivalents) identifiant chacune des données secrètes de façon séparée. Pour la suite, on dénomme « label MSK » le label identifiant la clé maître MSK. A titre d'exemple, le label MSK peut être l'identifiant d'objet attribué à l'objet informatique créé et instancié pour stocker la clé MSK.

Le chargeur 110 de système d'exploitation de carte est identifié à l'aide d'un identifiant unique ID_{loader}, différent d'un élément sécurisé à l'autre. Cet identifiant est assimilable à un numéro de série de l'élément sécurisé 100. La fonction première du chargeur est l'obtention et l'exécution de scripts d'installation de packages en mémoire 104 de l'élément sécurisé. Le chargeur 110 peut être muni de clés de session ou transport (éventuellement uniques ou communes à un lot de eSEs) pour permettre une communication sécurisée à distance avec un serveur externe.

Par ailleurs, un compteur de dérivation 114 est prévu en mémoire non volatile (réinscriptible) lequel compteur est initialisé à une valeur d'initialisation (par exemple 0) et est incrémenté à chaque diversification de la clé maître MSK par le chargeur 110. L'incrément peut être effectué par pas de 1 ou d'un autre entier positif. La diversification de clé est une opération connue de l'homme du métier qui génère une ou plusieurs clés secrètes à partir d'une valeur secrète initiale (la clé maître MSK).

Si plusieurs clés secrètes sont stockées, plusieurs compteurs de dérivation 114 peuvent être prévus, associés chacun à l'un des clés secrètes pour comptabiliser leurs diversifications.

Un drapeau 116 d'état du SE est également prévu en mémoire non volatile réinscriptible pour suivre l'état de personnalisation de l'élément sécurisé. Ce drapeau est initialement mis à une première valeur d'état non diversifié E₁ (par exemple 0). Ce drapeau a vocation à changer de valeur et donc passer à une seconde valeur d'état diversifié E₂ (par exemple 1) lors de la diversification de la clé maître MSK en clé de dérivation pour la personnalisation du système d'exploitation (et donc de l'élément sécurisé). Le drapeau peut être remis à la première valeur d'état E₁ lors de l'installation d'un nouveau système d'exploitation (incluant par exemple une mise à jour de l'OS). Optionnellement, le drapeau peut être mis à une troisième valeur d'état personnalisé E₃, lors de la génération des données personnalisées.

Ce drapeau permet ainsi à l'élément sécurisé de savoir si la génération de la clé de dérivation a déjà eu lieu et/ou si celle des données personnalisées a également eu lieu. Cela est utile notamment pour identifier le premier démarrage du système d'exploitation et ainsi éviter des générations intempestives à chaque redémarrage du système d'exploitation.

Comme montré sur la figure, d'autres données 118 notamment déjà personnalisées peuvent également être chargées dans l'eSE 100, de façon optionnelle.

L'interface de communication 106 de l'élément sécurisé permet notamment une communication (par exemple à l'aide de commandes APDU) avec un agent 202 exécuté dans le dispositif hôte 200. Un tel agent peut communiquer avec l'extérieur du dispositif hôte 200 à l'aide d'interfaces de communication appropriées (modules de communication sans fil typiquement). A titre d'exemple, il peut s'agir d'un agent spécifique à un opérateur (téléphonique, bancaire, automobile, etc.), qui est configuré pour se connecter à une infrastructure 250 de l'opérateur composée d'un ou plusieurs serveurs connectés entre eux, lesquels sont désignés ci-après sous l'appellation de « serveur » (au singulier).

Cette infrastructure 250 de l'opérateur gère une flotte d'eSEs sur le terrain (c'est-à-dire embarqués dans des dispositifs hôtes) en stockant, dans une base de données dédiée 252 (montrée en **Figure 3****),** une image de chacun des eSEs (donc associée à chaque ID_{loader}) sur le terrain afin de réaliser de façon efficace et sûre des opérations avec ceux-ci. Cette image peut par exemple comporter une copie des données secrètes des eSEs, des systèmes d'exploitation et logiciels installés. Aussi, dans le cas d'une personnalisation réalisée sur le terrain comme prévue par l'invention, cette « image » des eSEs doit également évoluer pour refléter cette personnalisation, sans pour autant que les données personnalisées soient échangées et donc soumises au risque d'être interceptées. La base de données 252 comprend ainsi, de façon initiale une copie de la clé maître MSK.

En référence à la **Figure 3****,** un événement 300 déclenche un processus initial de personnalisation selon l'invention. Cet événement peut être la première mise sous tension du dispositif hôte 200 ou de l'eSE 100 (correspondant donc à une première utilisation de l'eSE). En variante, il peut également s'agir d'une action volontaire d'un utilisateur dans un menu du dispositif hôte 200. Dans une autre variante, il peut s'agir de la détection de l'absence d'OS dans l'eSE 100 ou de la disponibilité d'une mise à jour de l'OS sur le serveur 250. Une autre variante peut être l'expiration d'une temporisation pour une interrogation périodique de disponibilité d'OS ou de mise à jour de l'OS.

Ici c'est l'agent 202 de l'équipement hôte 200 qui conduit la personnalisation de l'eSE 100. A l'étape 302, l'agent 202 envoie une requête, par exemple APDU, à l'eSE 100 aux fins d'obtenir l'identifiant ID_{loader} ainsi qu'un identifiant de package de système d'exploitation ID_{package} déjà installé dans l'eSE.

A l'état de la **Figure 2a****,** aucun système d'exploitation n'a encore été installé. Une valeur NULL peut alors être utilisée comme ID_{package} pour indiquer cet état.

D'une façon générale sinon, l'identifiant ID_{package} peut suivre différents formats selon différents modes de réalisation :
- un identifiant lié à l'OS seul : ID_{package} = version de l'OS,
- un identifiant lié à l'OS et aux données accompagnant l'OS qu'elles soient pré-personnalisées et/ou personnalisées. Par exemple, ID_{package} = version du package {OS, données} installé, ou ID_{package} = version du package {OS, données pré-perso} installé || version des données personnalisées chargées, avec « || » l'opérateur concaténation,
- un identifiant lié à l'OS et un identifiant lié aux données accompagnant l'OS (pré-perso et/ou perso). Par exemple, ID_{package} = version de l'OS || version des données chargées, ou ID_{package} = version de l'OS || version des données pré-personnalisées chargées || version des données personnalisées chargées.

En réponse à la requête, l'eSE 100 (le chargeur 110) récupère les deux identifiants demandés à l'étape 304 et les renvoie à l'agent 202 à l'étape 306.

A l'étape 308, l'agent 202 transmet une requête d'obtention d'un package de système d'exploitation au serveur 250, de façon classique, par exemple via HTTPS ou OTA (« over-the-air » en anglais). La requête comporte les deux identifiants ID_{loader} et ID_{package}. Une interrogation périodique de disponibilité d'OS ou de mise à jour de l'OS peut également être assimilée à une telle requête d'obtention.

A réception de la requête, le serveur 250 extrait (étape 310) les deux identifiants, et sur la base de ceux-ci, vérifie (étape 312) la disponibilité d'une nouvelle version de package de système d'exploitation. Selon le format de l'identifiant ID_{package}, il peut s'agir de vérifier si un nouvel OS est disponible et/ou si de nouvelles données pré-personnalisées (données statiques) sont disponibles et/ou si de nouvelles données personnalisées (données dynamiques) sont disponibles.

Cette vérification peut consister en une requête dans la base de données 252 pour vérifier le package associé à l'ID_{loader}. Si celui-ci est différent du package portant l'identifiant ID_{package}, alors un nouveau package doit être installé.

Cette vérification peut être effectuée de façon séparée pour l'OS et les données pré-personnalisées et/ou personnalisées selon le format de l'identifiant ID_{package}. Dans ce cas, les éléments (OS et/ou données) identifiés comme nouveaux sont compilés dans un nouveau package unique (celui à installer).

A l'étape 314, les nouveaux éléments (OS, données) à installer sont identifiés dans la base 252, puis récupérés (étape 316) par le serveur 250.

A l'étape 318, le nouveau package de système d'exploitation est formé : script d'installation et éléments (système d'exploitation, éventuellement uniquement une mise à jour et/ou des données pré-personnalisées et/ou des données déjà personnalisées), puis renvoyé par le serveur 250 à l'agent 202 en réponse à la requête 308.

A l'étape 320, l'eSE reçoit ledit nouveau package de l'agent 252, typiquement via APDU.

Si aucun OS n'est déjà installé sur l'eSE 100, c'est le chargeur 110 d'OS qui reçoit le package pour exécution du script d'installation. Si un OS est déjà installé, c'est l'OS actif lui-même qui reçoit le package (mise à jour de l'OS) pour exécution du script d'installation.

Après vérification de l'intégrité du package reçu, le chargeur d'OS 110 ou l'OS actif charge en mémoire de travail (mémoire RAM 102) le script d'installation et le contenu du package (nouvel OS et les données relatives) puis installe l'ensemble en mémoire non volatile 104 lors de l'étape 322 par exécution du script d'installation.

A la fin de l'installation, le drapeau 116 d'état de diversification est mis à 0 (état E₁) (étape 324) pour indiquer qu'une diversification est nécessaire après cette nouvelle installation. Optionnellement, une vérification de l'intégrité de l'OS installé peut être effectuée, afin de poursuivre le procédé qu'en cas d'intégrité confirmée.

La **Figure 2b** illustre l'élément sécurisé 100 après l'installation d'un nouveau package de système d'exploitation. Comme représenté sur la figure, l'installation conduit à la présence, en mémoire non volatile 104, du package 120 identifié par l'identifiant ID_{package}. Le package 120 installé comporte par exemple un nouvel OS 122, de nouvelles données pré-personnalisées 124 associées à l'OS et optionnellement de nouvelles données personnalisées 126.

A ce stade, si de façon optionnelle certaines données personnalisées 118, 126 peuvent être présentes, l'eSE 100 est toujours dans un état non diversifié (drapeau 116 à 0, i.e. état E₁) eu égard à la diversification de la clé maître MSK. De façon incidente, l'état E₁ indique également une non-personnalisation du SE eu égard à la dérivation de données personnalisées à partir de données pré-personnalisées 112, 124 et/ou de la clé de dérivation (non encore générée à ce stade).

De retour à la **Figure 3****,** la personnalisation de l'élément sécurisé à l'aide de la clé maître MSK est déclenchée par l'événement 326. Pour rappel, cette personnalisation comporte deux phases : la diversification de la clé maître MSK en clé de dérivation, puis la dérivation de données personnalisées à partir de cette clé de dérivation.

Dans un mode de réalisation, l'événement 326 est un événement de fin d'installation du système d'exploitation (étapes 322, 324). Cet événement peut simplement consister en la détection d'une dernière commande du script, par exemple via un champ particulier de fin de script dans son entête ou simplement parce que la dernière commande de script est pré-connue. En variante, un changement d'état de cycle de vie particulier du SE peut être détecté qui correspond à une fin d'installation.

Dans une variante, l'événement 326 est la détection d'un premier démarrage (premier boot) du système d'exploitation 122 nouvellement installé. Dans ce cas, pour identifier un tel premier démarrage, l'eSE 110 vérifie à l'étape 326a que le drapeau 116 est bien à la première valeur d'état non diversifié E₁ (soit 0).

Dans l'affirmative (événement détecté et éventuellement drapeau 116 à E₁), l'eSE 100 lance la diversification 328 de la clé cryptographique maître pour générer une clé (cryptographique) de dérivation.

Cette opération de diversification est contrôlée par le chargeur 110.

Aussi, si le chargeur 110 détecte directement l'événement 326 (notamment s'il installe lui-même le package 120 pour la première fois), alors il engage directement l'opération 328 de diversification. Si l'OS 122 détecte l'événement 326 (et optionnellement 326a), alors celui-ci appelle un service du chargeur 110, typiquement l'API 111, pour faire engager, par ce dernier, l'opération 328 de diversification. En variante, le chargeur 110 peut également utiliser l'API 111 pour réaliser l'opération 328 de diversification s'il n'a pas accès directement à la clé MSK.

Le chargeur 110 incrémente le compteur de dérivation 114 aux fins de cette opération, puis récupère les paramètres suivants (éventuellement partiellement reçus de l'OS 122 lorsque ce dernier initie la diversification) pour commander l'API 111 : l'identifiant ID_{loader}, l'identifiant ID_{package} du système d'exploitation chargé et installé et la valeur courante V_{deriv} du compteur de dérivation 114. Si plusieurs données secrètes ou clés maîtres sont en mémoire de l'élément sécurisé, le label MSK désignant la clé cryptographique maître MSK à utiliser peut également être récupéré pour sélectionner la clé MSK appropriée.

A l'étape 328, une nouvelle clé de dérivation est générée à partir de ces paramètres, en utilisant par exemple une formule de diversification de l'état de l'art.

La nouvelle clé de dérivation peut écraser, en mémoire sécurisée 104 (non volatile réinscriptible), la clé MSK et donc devenir la nouvelle clé maître MSK toujours identifiée par le label MSK.

En variante, la nouvelle clé de dérivation peut être stockée, dans la mémoire sécurisée, à côté de la clé MSK d'origine. Dans ce cas, un label de clé dédié (identifiant la clé de dérivation) peut être obtenu par le chargeur 110 ou l'API 111, typiquement un identifiant attribué à l'objet informatique créé pour stocker la nouvelle clé de dérivation. En variante, le chargeur ou l'API peut de façon interne conserver le même label de clé MSK pour désigner la dernière clé de dérivation générée.

La diversification de la clé MSK est également connue sous l'appellation de « rotation » de la valeur de la clé MSK. Il faut entendre par rotation ou diversification de la valeur de la clé MSK, le fait de calculer (générer, modifier, mettre à jour) une nouvelle valeur de la clé MSK et de la mémoriser dans une mémoire non volatile réinscriptible 104 de type flash, EEPROM ou autre.

En fin d'étape 328, le drapeau 116 est mis à l'état E₂ indiquant un état diversifié (clé de dérivation générée) mais non personnalisé de l'élément sécurisé 100. Cet état intermédiaire permet à l'élément sécurisé, en cas de redémarrage, de savoir si les opérations suivantes de personnalisation doivent être exécutées.

La **Figure 2c** illustre l'élément sécurisé 100 après la diversification de la clé maître pour obtenir la clé de dérivation, notée MSKₙ. On constate à nouveau que la personnalisation de l'eSE n'est pas complète, le drapeau 116 étant à l'état E₂. Par rapport à l'état de la **Figure 2b****,** le compteur 114 a été mis à jour et la nouvelle clé de dérivation MSKₙ a écrasé l'ancienne clé maître MSK ou est stockée en plus.

De retour à la **Figure 3****,** l'étape optionnelle 330 consiste en un redémarrage de l'OS 122, notamment si l'événement 326 n'est pas un tel redémarrage. Au cours de ce redémarrage, l'état du drapeau 116 peut être vérifié et les étapes suivantes être exécutées seulement si l'état est E₂.

Ce redémarrage 330 ou la fin de l'opération de diversification 328 déclenche l'étape 332 de génération de données personnalisées.

Cette génération peut consister à dériver ces données personnalisées des données de pré-personnalisation 112 et/ou 124 en mémoire à l'aide de la clé de dérivation MSKₙ. Il s'agit donc de dériver des données spécifiques (dynamiques ou personnalisées) pour le fonctionnement de l'élément sécurisé 100 à partir des données pré-personnalisées 112, 124. Comme indiqué plus haut, ces données spécifiques peuvent inclure des justificatifs d'identification (credentials), des clés cryptographiques, des données ou profils d'abonné), des données d'opérateur (par exemple des adresses de serveurs du réseau de l'opérateur), des codes personnels d'identification (« PIN » ou « personal identification number » en anglais) d'utilisateur ou d'applications, des valeurs de données d'applications, etc.

En variante ou en combinaison, des données personnalisées, par exemple de nouvelles clés cryptographiques personnalisées, peuvent être générées par une nouvelle diversification directement de la clé de dérivation MSKₙ sans utiliser d'autre donnée pré-personnalisée. Il s'agit ici de simplement diversifier la clé de dérivation afin d'obtenir une ou plusieurs clés cryptographiques personnelles, i.e. spécifiques à l'élément sécurisé.

L'OS 122 peut par exemple appeler l'API 111 du chargeur 110 pour faire engager, par ce dernier, l'opération 332 de génération de données personnelles.

C'est cette opération de personnalisation de l'eSE 100 qui permet un gain de temps comparé aux techniques connues, car elle est réalisée sur le terrain, sans phase de personnalisation sur un site dédié.

Une fois l'opération de personnalisation 332 effectuée, le drapeau 116 est mis (étape 334) à l'état E₃ indiquant un état personnalisé de l'eSE 100.

La **Figure 2d** illustre l'élément sécurisé 100 après cette opération de génération des données personnalisées par dérivation à partir de la clé de dérivation. L'eSE 100 comporte ainsi de nouvelles données personnalisées 130 issues de cette dérivation. En outre le drapeau 116 est désormais à la valeur E₃.

De façon optionnelle, les données pré-personnalisées 124 ayant servi à cette dérivation peuvent être effacées si elles n'ont plus d'utilité.

De retour à la **Figure 3****,** une fois l'eSE 100 personnalisé, ce dernier envoie un message de fin de personnalisation au serveur 250 à l'étape 336. Cet envoi est réalisé via l'agent 202 et le message comporte les paramètres utilisés pour la diversification 328, à savoir l'identifiant ID_{loader}, l'identifiant ID_{package} du système d'exploitation chargé et installé et la valeur V_{deriv} du compteur de dérivation 114 lors de la diversification. En cas de présence de plusieurs clés dans l'élément sécurisé, le label MSK désignant la clé cryptographique maître MSK utilisée peut également être envoyée au serveur, afin que ce dernier puisse savoir quelle clé a été utilisée.

Grâce à ces éléments, le serveur 250 est en mesure d'identifier l'eSE 100 concerné (grâce à l'ID_{loader}), d'effectuer la même diversification de clé maître MSK que l'opération 328 (grâce à l'ensemble de ces paramètres), puis de dériver les données personnalisées de l'eSE (grâce à la clé de dérivation obtenue et aux ID_{loader} et ID_{package} qui permettent de connaître les données pré-personnalisées 112, 124 utilisées). Ces étapes sont illustrées sur la figure sous la référence 338. La base de données 252 est alors mise à jour (étape 340).

De la sorte, le serveur 250 maintient un miroir de l'état de chaque eSE, dans sa base 252, sans qu'aucun échange de donnée secrète ne soit effectué.

Avantageusement, on effectue le procédé de la **Figure 3****,** à savoir la rotation/diversification de la valeur de la clé MSK et la dérivation des données personnalisées 130, à chaque installation et/ou mise à jour d'OS sur l'élément sécurisé 100. Cela permet d'augmenter l'aspect sécuritaire par rapport à cet OS en lui destinant de façon unique une nouvelle clé maître (de dérivation).

Dans un mode de réalisation, l'événement 326 déclenchant les opérations de personnalisation (diversification de la clé maître MSK puis génération des données personnalisées par dérivation) peut être décorrélé de l'installation d'un nouvel OS (incluant une mise à jour). Par exemple, cette personnalisation peut être déclencher à tout instant pendant la vie de l'élément sécurisé 100, sans installation ou mise à jour de l'OS. L'événement peut alors correspondre à titre illustratif à l'expiration d'une temporisation (durée temporelle), à la réception explicite d'une commande, à la détection d'un compteur ou seuil d'utilisation de la MSK courante, etc. Le drapeau 116 peut être remis à l'état E₁ au moment où une nouvelle personnalisation est nécessaire (e.g. déclenchement volontaire par l'opérateur mobile ou bancaire) et la personnalisation est déclenchée au prochain redémarrage (événement 326) de l'OS (plus généralement de l'eSE 100).

Grâce à l'invention, un élément sécurisé 100 peut être soudé dans un dispositif hôte final 200 sans système d'exploitation. Sur le terrain, l'utilisateur final sollicite l'activation d'un service qui nécessite l'installation de l'OS. L'administrateur (opérateur réseau, bancaire, mobile, etc.) déclenche alors le chargement de l'OS sur l'élément sécurisé en utilisant le chargeur 110. L'eSE génère alors la clé de dérivation puis l'OS installé génère les credentials diversifiés à partir de données (credentials) pré-personnalisés. L'OS peut désormais se connecter de façon sécurisée à un serveur distant et l'utilisateur peut utiliser le service activé.

De façon séparée, un fabricant de dispositifs peut fabriquer un large stock de dispositifs 200 intégrant un élément sécurisé 100. Les dispositifs sont vendus par exemple dans deux régions différentes nécessitant chacune un OS différent. Aussi, le fabricant peut faire charger le bon OS et générer des données personnalisées postérieurement à la production et à partir du même stock de dispositifs, et ce par région avant d'expédier les dispositifs configurés vers les régions concernées.

Enfin, durant la vie de l'élément sécurisé 100, l'OS courant peut devenir obsolète et nécessiter un remplacement (mise à jour) sur le terrain. Le nouvel OS est installé en utilisant le chargeur 110, lequel génère la clé de dérivation. L'OS peut alors dériver les crédentials personnalisés à partir des données pré-personnalisées et de cette clé. L'OS peut désormais se connecter de façon sécurisée à un réseau de télécommunications ou à un serveur distant.

Bien que la présente invention ait été décrite ci-dessus en référence à des modes de réalisation spécifiques, la présente invention n'est pas limitée à ces modes de réalisation spécifiques, et des modifications, qui se trouvent dans la portée de la présente invention, seront visibles pour un homme du métier.

De nombreuses autres modifications et variations s'imposeront à ceux qui sont versés dans l'art en se référant aux modes de réalisation illustratifs ci-dessus, qui ne sont donnés qu'à titre d'exemple et qui ne viennent pas limiter la portée de l'invention, celle-ci étant déterminée uniquement par les revendications annexées. En particulier, les différentes caractéristiques des différents modes de réalisation peuvent être échangés, le cas échéant.

Dans les revendications, le mot "comprenant" n'exclut pas d'autres éléments ou étapes, et l'article indéfini "un" ou "une" n'exclut pas une pluralité. Le simple fait que des caractéristiques différentes sont citées dans des revendications dépendantes mutuellement différentes n'indique pas qu'une combinaison de ces caractéristiques ne peut pas être utilisée avantageusement.

## Revendications

1. Elément sécurisé (100) configuré pour être intégré dans un dispositif hôte (200) et pour mettre en œuvre des services exécutés par un système d'exploitation (122) lorsque le système d'exploitation est chargé dans l'élément sécurisé, l'élément sécurisé comportant un chargeur de système d'exploitation (110) et au moins une clé cryptographique maître (MSK), l'élément sécurisé étant configuré pour :
- obtenir, d'un serveur (250), un package de système d'exploitation (120) et installer le système d'exploitation (122), et
- en réponse à l'installation du système d'exploitation, faire générer, par le chargeur de système d'exploitation, une clé de dérivation (MSKₙ) par diversification de la clé cryptographique maître, puis faire générer des données personnalisées (130) à l'aide de la clé de dérivation.

2. Elément sécurisé selon la revendication 1, dans lequel le package de système d'exploitation comprend des données de pré-personnalisation (124), et
l'élément sécurisé est configuré pour générer des données personnalisées (130) par dérivation des données de pré-personnalisation avec la clé de dérivation.

3. Elément sécurisé selon la revendication 1 ou 2, dans lequel le chargeur de système d'exploitation est configuré pour générer la clé de dérivation à partir de la clé cryptographique maître (MSK), d'un identifiant unique du chargeur de système d'exploitation (ID_{loader}), d'un identifiant unique du package de système d'exploitation ou du système d'exploitation chargé et installé (ID_{package}), et d'un compteur de dérivation (V_{deriv}) mis à jour à chaque génération de la clé de dérivation.

4. Elément sécurisé selon la revendication 3, configuré en outre pour, postérieurement à la génération de la clé de dérivation, envoyer à un serveur (250) l'identifiant unique du chargeur de système d'exploitation (ID_{loader}), l'identifiant unique du package de système d'exploitation ou du système d'exploitation chargé et installé (ID_{package}), le compteur de dérivation (V_{deriv}) et optionnellement un label désignant la clé cryptographique maître.

5. Elément sécurisé selon l'une des revendications précédentes, configuré en outre pour envoyer, au serveur, une requête (308) d'obtention du package de système d'exploitation, la requête comprenant un identifiant unique du chargeur de système d'exploitation (ID_{loader}) et un identifiant unique (ID_{package}) d'un package de système d'exploitation ou d'un système d'exploitation déjà installé s'il y en a un, et l'obtention du package de système d'exploitation est en réponse à la requête.

6. Elément sécurisé selon l'une des revendications 1 à 5, configuré pour générer la clé de dérivation en réponse à un événement de fin d'installation du système d'exploitation.

7. Elément sécurisé selon l'une des revendications 1 à 5, configuré pour générer la clé de dérivation en réponse à un premier démarrage du système d'exploitation installé.

8. Elément sécurisé selon l'une des revendications précédentes, comprenant un drapeau (116) mis à une première valeur d'état non diversifié (E₁) lors de l'installation du système d'exploitation et à une seconde valeur d'état diversifié (E₂) lors de la génération de la clé de dérivation.

9. Elément sécurisé selon l'une des revendications précédentes, dans lequel la clé cryptographique maître est stockée en mémoire sécurisée et accessible par le chargeur de système d'exploitation uniquement.

10. Procédé de personnalisation d'un élément sécurisé (100) configuré pour être intégré dans un dispositif hôte (200) et pour mettre en œuvre des services exécutés par un système d'exploitation lorsque le système d'exploitation est chargé dans l'élément sécurisé, l'élément sécurisé comportant un chargeur de système d'exploitation (110) et au moins une clé cryptographique maître (MSK), ledit procédé comportant les étapes suivantes :
- obtenir (318, 320) d'un serveur (250) un package de système d'exploitation (120) et installer (322) le système d'exploitation (122),
- en réponse à l'installation du système d'exploitation, faire générer (328), par le chargeur de système d'exploitation (110), une clé de dérivation (MSKₙ) par diversification de la clé cryptographique maître (MSK) puis faire générer (332) des données personnalisées (130) à l'aide de la clé de dérivation.

11. Procédé selon la revendication 10, comprenant en outre l'étape suivante : générer (332) des données personnalisées (130) par dérivation de données de pré-personnalisation stockées dans l'élément sécurisé, avec la clé de dérivation.
